# EUROPEAN PATENT SPECIFICATION

(11) **EP 2 168 332 B1**
(45) Date of publication and mention of the grant of the patent: **08.01.2014**
(21) Application number: 08771469.7
(22) Date of filing: 19.06.2008
(51) Int. Cl.: H04L 1/00, H04W 48/12

(54) **BROADCAST CHANNEL SIGNAL AND APPARATUS FOR MANAGING THE TRANSMISSION AND RECEIPT OF BROADCAST CHANNEL INFORMATION**
RUNDFUNKKANALSIGNAL UND VORRICHTUNG ZUR VERWALTUNG DER SENDUNG UND DES EMPFANGS VON RUNDFUNKKANALINFORMATIONEN
SIGNAL DE CANAL DE RADIODIFFUSION ET APPAREIL DE GESTION DE LA TRANSMISSION ET DE LA RÉCEPTION D'INFORMATIONS DU CANAL DE RADIODIFFUSION

(30) Priority: 20.06.2007 US 765909
(43) Date of publication of application: 31.03.2010
(73) Proprietor: Motorola Mobility LLC, Libertyville, IL 60048 (US)
(72) Inventor: BACHU, Raja S., Somerset, NJ 08873 (US); BUCKLEY, Michael E., Grayslake, Illinois 60030 (US); STEWART, Kenneth A., Grayslake, Illinois 60030 (US)
(74) Representative: Openshaw, Paul Malcolm
(86) International application number: PCT/US2008/067488
(87) International publication number: WO 2008/157686

(56) References cited:
- EP-A- 1 811 674
- EP-A- 1 811 711
- GB-A- 2 418 571
- US-A1- 2007 042 794
- MOTOROLA: "R2-061459 System Broadcast" INTERNET CITATION, 3 May 2006 (2006-05-03), XP002497685 [retrieved on 2006-05-03]

## Description

### FIELD OF THE INVENTION

The present invention relates generally to the management of the transmission and receipt of channel information and, more particularly, to the management of the transmission and receipt of channel information having variant and invariant information pertaining to a broadcast control channel in a wireless communication system.

### BACKGROUND OF THE INVENTION

A broadcast control channel is typically a downlink channel received from the network infrastructure that contains specific parameters needed by a mobile subscriber in order for the mobile subscriber to identify the network and gain access to it. Often times, the broadcast control channel assists the mobile in translating between a logical and a physical channel, where the broadcast control channel will sometimes include frequency and timing information, that assist in accessing the network infrastructure's other channels.

Because of the importance of the broadcast control channel information in establishing a wireless communication link between the mobile subscriber and the network infrastructure, it is beneficial to organize and arrange the control channel information so as to enhance the reliability of the communication of the broadcast channel information. In at least some instances, the data will be encoded so as to include error detection and error correction information, as well as transmit information redundancies.

In at least some instances, the broadcast control channel information will be organized and arranged to be communicated during transmission intervals, where some of the broadcast control channel information may be communicated multiple times during which at least some of the information will remain the same or static. Each separate transmission within a transmission interval is sometimes embedded within a specific subinterval of the transmission interval referred to as a frame, where all or some of the frames associated with a particular broadcast communication channel, herein referred to as an active frame, may include broadcast control channel information. In some instances, some of the broadcast control channel information may vary between frames.

For example, information such as channel bandwidth, base station, and reference power levels, which may be periodically transmitted via a broadcast control channel may be defined as remaining static and/or invariant for the duration of a transmission interval. Other information such as system frame number, which corresponds to a system time reference may be allowed to vary between frames, even within a transmission interval.

In at least some proposals, the static information may be encoded using various transmission configurations, which define the conditions under which and the nature of a combination of encoding, modulating, interleaving and scrambling is performed, which in at least some instances can serve to further assist in the reliable receipt of the same. Multiple static retransmissions of the encoded data using the same or related transmission configurations can be used to allow for the combining of the received information by the mobile station across multiple transmissions or active frames within a particular transmission interval. However, the incorporation and/or encoding of some information that varies between frames can make the combining of multiple transmissions across multiple active frames of a transmission interval more difficult, as it is not always clear to the receiver how the varying data might affect the format after encoding between active frames during which the broadcast channel information is being transmitted. As a result, information that varies between frames is sometimes excluded from some encodings, which are used to enhance the reliability of the information being communicated.

The applicants have recognized that it is possible to apply a transformation, where the encoded differences can be negated, so as to allow the combining of the encoded received broadcast channel information prior to decoding, where the encoding will produce a predictable difference between data associated with the plurality of successively transmitted active frames having a known difference prior to encoding based upon a known relationship between the frames in which the broadcast channel information is encoded within a particular transmission interval, and where the predictable differences can be negated. Furthermore, the applicants have recognized, that the encoding produces a predictable difference, when the data is encoded using one or more linear encoding techniques, and the difference prior to encoding is known.

EP 1 811 711 A1and EP 1 811 674 A1 are documents which form part of the state of the art in the sense of Article 54(3) EPC only. These documents disclose methods and apparatus for handling a difference between a first and second message prior to decoding.

Motorola: "R2-061459 System Broadcast", Internet Citation, 3 May 2006, discusses the general understanding that a broadcast channel will have certain inherent features including portions of the information that will be variant between successive active frames, and portions of the information that will be invariant between successive active frames.

US 2007/042794 A1 discloses a method of scheduling messages based upon whether there are any changes in the content of each message to be scheduled, and also considering certain information that may be needed by the terminal.

GB 2 418 571 A discloses a method of providing radio bearer configuration information to enable a mobile communication device to receive a multicast/broadcast service.

### SUMMARY OF THE INVENTION

In a first aspect, the present invention provides a wireless communication serving station, as claimed in claim 1.

In a further aspect, the present invention provides a wireless communication device, as claimed in claim 15.

These and other objects, features, and advantages of this invention are evident from the following description of one or more preferred embodiments of this invention, with reference to the accompanying drawings.

### BRIEF DESCRIPTION OF THE DRAWINGS

FIG. 1 is an exemplary topographical view of a geographical region representing at least a portion of the coverage area for a wireless communication system;
FIG. 2 is a block diagram of a broadcast channel signal;
FIG. 3 is a block diagram of broadcast channel information, which forms the basis of the information encoded and used to form an active frame for transmission;
FIG. 4 is a block diagram of a wireless communication device, such as a mobile subscriber, and the portion of the cellular network infrastructure with which the communication device more directly communicates in connection with the receipt of a broadcast channel signal;
FIG. 5 is a more detailed block diagram of a mobile subscriber for use in receiving a wireless communication signal, and decoding the same, in accordance with at least one embodiment of the present invention; and
FIG. 6 is a flow diagram of a method of receiving and attempting to decode one or more successively transmitted frames in a wireless communication device for a broadcast of interest in a cellular communication network.

### DETAILED DESCRIPTION OF THE PREFERRED EMBODIMENT(S)

While the present invention is susceptible of embodiment in various forms, there is shown in the drawings and will hereinafter be described presently preferred embodiments with the understanding that the present disclosure is to be considered an exemplification of the invention and is not intended to limit the invention to the specific embodiments illustrated.

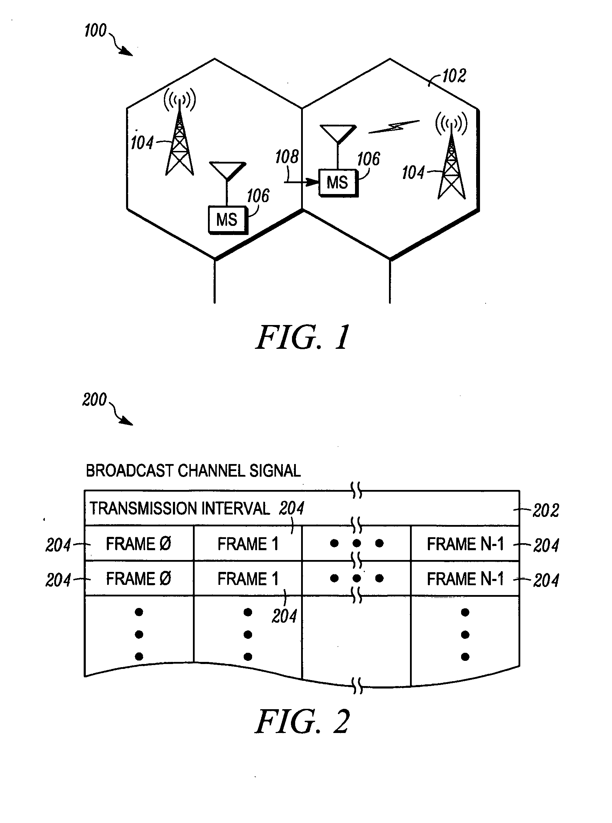

FIG. 1 illustrates an exemplary topographical view of at least a portion of a wireless communication system. The topographical view 100 includes a plurality of cells 102 pictorially represented as adjacent hexagons. The hexagons are only rough approximations of the footprint or area of coverage associated with each of a plurality of cellular regions, where in reality the area of transmission is not so uniformly defined. Each cell is typically served by one or more base transceiver stations (BTS) 104, referred to as a serving station, which communicates with mobile subscriber (MS) 106, such as a mobile wireless communication device, located and/or traveling 108 within the corresponding cell 102.

As a mobile subscriber 106 powers on or enters a new cell, a mobile subscriber will need to acquire the signaling information associated with the new cell. In many cases, this will involve monitoring one or more broadcast control channels, so as to allow the mobile station to obtain synchronization, timing and/or other related information consistent with establishing communication capabilities with the new cell. Because control channel reception is often a precursor for establishing other forms of communication with a particular cellular area, a more robust and/or effective manner in establishing a communication connection and receiving the information being conveyed by the broadcast control channel is desirable. The broadcast channel signal 200 is arranged in one or more transmission intervals 202, which each includes a plurality of transmissions or frames 204, where one or more of the transmissions are active frames in which broadcast channel information is transmitted. In the embodiment illustrated in FIG. 2, a transmission interval 202 coincides with a row of N frames, where N is an integer value.

In some cases, the broadcast channel signal will be encoded as part of each frame in a transmission interval. In other instances, it is possible that broadcast channel information will be transmitted on fewer than all of the corresponding frames. As noted above, frames in which broadcast channel information is transmitted as part of the transmission frame are identified in the present application as active frames. By transmitting on fewer than all of the frames associated with a particular transmission interval, the frames which do not support transmission of the broadcast channel signal, can be made available to other forms and/or types of data transmission.

In some instances it may be desirable to combine multiple active frames to more quickly and/or better receive the information being conveyed via the broadcast channel signal. Hence, the repeated transmission of at least some broadcast channel information across multiple active frames within a particular transmission interval. However, not all information can be readily repeated, where for example, in at least one discussed proposal, the broadcast information includes a system frame number that varies with each frame transmission.

Generally, broadcast channel information often includes both an invariant portion and a variant portion. However, even some subportions of the variant portion can be invariant. Furthermore, by more specifically controlling the relationship between the value of the variant portion, such as the system frame number, with respect to the beginning boundary value of the transmission interval and more specifically controlling the number of transmissions or frames in a transmission interval, the number of variant information bits in the variant subportion of the variant portion can be better managed. For example numbering the system frames, so that the frame number of the first frame after the beginning boundary of the transmission interval has a modulus n value that is equal to zero, where n is the number of transmissions (i.e. frames) in the transmission interval, can minimize the number of bits across which the system frame number might have a different bit value in any two transmissions in a particular transmission interval. In such an instance, the system frame number can predictably change, and in at least one embodiment of the present invention, increments by one in each adjacent subsequent frame. However, one skilled in the art will readily recognize the value of the present invention regardless as to whether the value of the system frame number is defined to increment for adjacent subsequently transmitted frames, as noted above, where alternatively a properly defined predetermined predictable sequence can also benefit from the teachings of the present invention, if the system frame values from which the frames in a particular transmission interval are assigned and are selected from a list of values where a predefined predictable set of bits are allowed to change within the particular transmission interval.

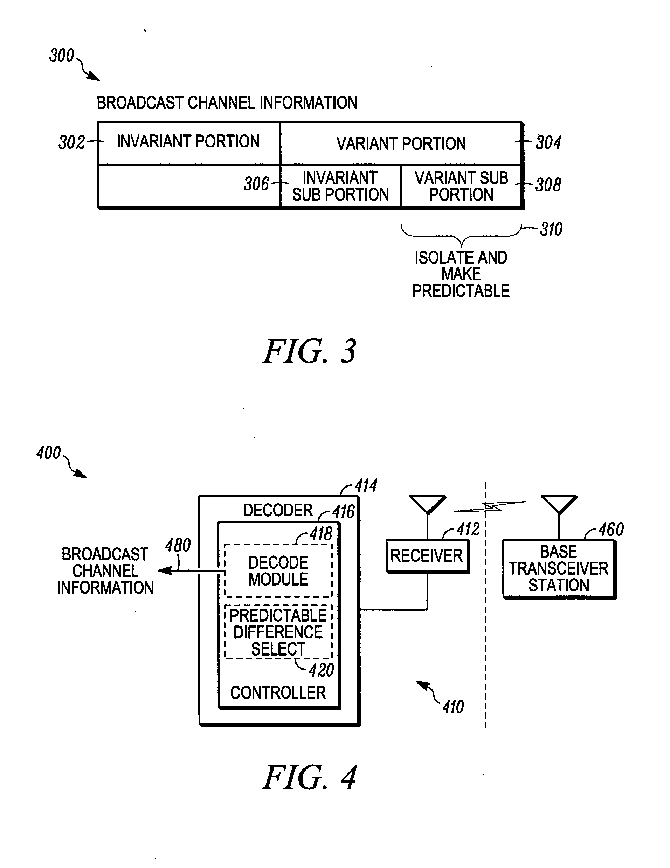

FIG. 3 illustrates broadcast channel information 300, in accordance with at least one aspect of the present invention, where generally, the broadcast channel information 300 will include an invariant portion 302 and a variant portion 304, where the variant portion 304 to the extent that all of the bits do not change or do not need to change within a transmission interval 202 is further subdivided into an invariant subportion 306 and a variant subportion 308. In the illustrated embodiment the variant subportion where the least significant bits, which are likely to change have a corresponding value associated with the frame within the transmission interval beginning with zero and counting incrementally each subsequent adjacent frame.

In the illustrated embodiment, the variant subportion represents an isolation of the variant subportion where the predictable difference between adjacent successively transmitted active frames is known and allows for a predictable difference in the corresponding encoded values without actually knowing the corresponding values prior to encoding. In this way, the variant subportion which has been isolated can be negated, so as to allow the subsequent combining of the multiple received encoded transmissions.

With regards to decoding a received active frame, the wireless communication device can attempt to decode the encoded data. Nevertheless, in some circumstances, it may not be possible to decode the broadcast channel information 300, based upon the receipt of a single active frame. In these instances, upon receipt of a subsequent active frame, the earlier received active frame and the latter received active frame can be used to attempt to combine and decode the multiple received transmissions. In this instance the wireless communication device can make one or more assumptions regarding the position of the frame relative to the beginning boundary of the transmission interval, and then determine an appropriate predictable difference value to apply to one of the signals received in the pair of active frames, where the purpose is an attempt to negate any differences between the two received signal values. In some instances, the wireless communication device can cycle through each possible assumption, which may result in a different predictable difference being applied, based upon an understanding of the relationship of the two active frames being combined prior to transmission. An attempt to decode is then made.

The process can be further repeated as necessary to include still further additional active frames, in the attempt to combine and decode. Alternatively, in the event that any of the earlier received active frames are determined to be preferably excluded from further attempts to combine, the same can be eliminated from the current set of received signals from active frames that are being considered. At least one reason to exclude an earlier received active frame may be based upon a belief or an understanding that the invariant broadcast channel information may only be invariant across the transmission of the active frames of a particular transmission interval, such that one might exclude an earlier received active frame on the assumption that it was potentially part of a different earlier transmission interval across which an invariance of the broadcast channel information between different active frames can not be confirmed. It is also possible however, to readily extend the method of combining and decoding based on assumptions concerning the state of the invariant and variant broadcast information to include the case where the receiver makes a further assumption that the portion of the broadcast information that is invariant within a transmission interval also does not change from one transmission interval to the next.

FIG. 4 illustrates a block diagram 400 of a wireless communication device 410, such as a mobile subscriber, and the portion of the cellular network infrastructure 460 with which the wireless communication device 410 more directly communicates in connection with the receipt of a broadcast channel signal 200. The wireless communication device 410 includes a receiver 412 for receiving a wireless communication signal. The wireless communication device 410 further includes a decoder 414 for converting the received wireless communication signal into broadcast channel information 480, which was intended to be transmitted in connection with the encoding for transmission.

The decoder 414 further includes a controller 416 including a decode module 41 8, which is adapted to attempt to decode each active frame of the received wireless communication signal, as it is received using a decoding sequence, respectively corresponding to a transmission specific configuration governing the original encoding. The controller additionally includes a predictable difference select 420, which is adapted to identify an assumed predictable difference in the encoded value between a pair of received signals associated with a pair of active frames. For the present purpose, a decoding sequence means a sequence of receiver processing operations designed in complementary fashion to the assumed transmitter configuration used to encode the broadcast channel information, i.e. a sequence of operations (in the order appropriate to the transmitter configuration) of de-encoding, de-modulating, de-interleaving and de-scrambling. Similarly, the decoder 414 of the wireless communication device 410 can be used to attempt to decode a combination of multiple active frames in the event that the decoder 414 is unable to decode a single received active frame.

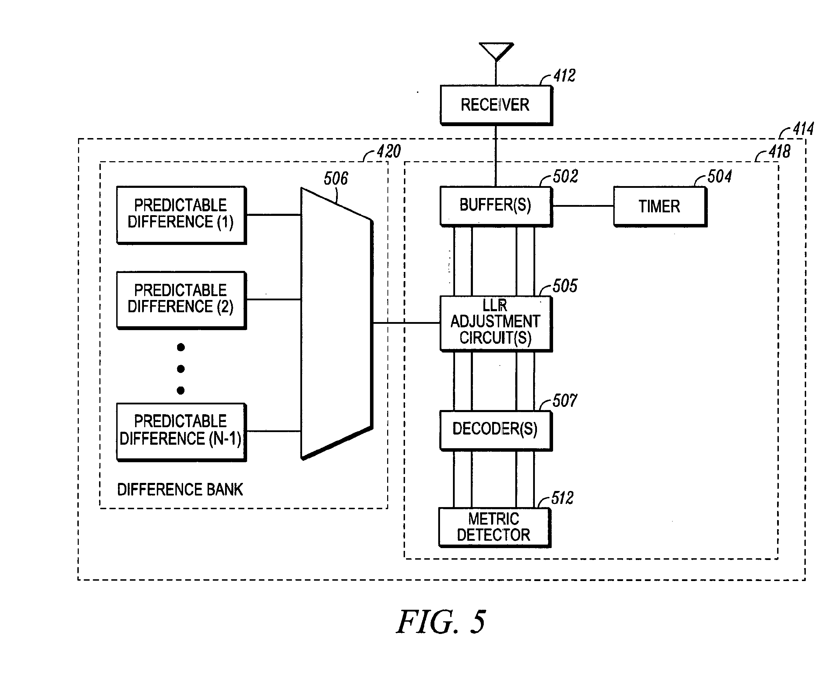

FIG. 5 illustrates a more detailed block diagram 500 of a mobile subscriber for use in receiving a wireless communication signal, and decoding the same, in accordance with at least one embodiment of the present invention. Similar to the wireless communication device 400 illustrated in FIG. 4, the mobile subscriber includes a receiver 412 for receiving a wireless communication signal, which is coupled to decoder 414. The decoder includes a decode module 418 and a predictable difference select module 420. The decode module 418 includes one or more buffers 502 for storing active frames that have been previously received. A timer 504 provides a relative temporal relationship of the active frames received, such that a more accurate association can be made relative to the decoding of other received active frames, in view of an assumption relative to a first received active frame. This can account for instances in which intermediate active frames between two received active frames may not have been received and/or transmitted for one or more reasons.

The buffers 502 are coupled to one or more log likelihood ratio adjustment circuits 505, which are adapted to selectively separately apply one of one or more predictable differences to each of the wireless communication signals that have been received and are stored in the one or more buffers 502, and forward the corrected values to the decoders 507. The separate selective application of one or more predictable differences can be accomplished via a demultiplexor 506 coupled to definitions for one or more predictable differences 508, based upon a set of known differences prior in the broadcast channel information prior to encoding.

Upon attempting to decode the active frames that have been previously received, the attempted decodings are then applied to a metric detector 512, which identifies the threshold at which a match associated with a successful decoding is confirmed. This may include e.g. checking a cyclic redundancy check code.

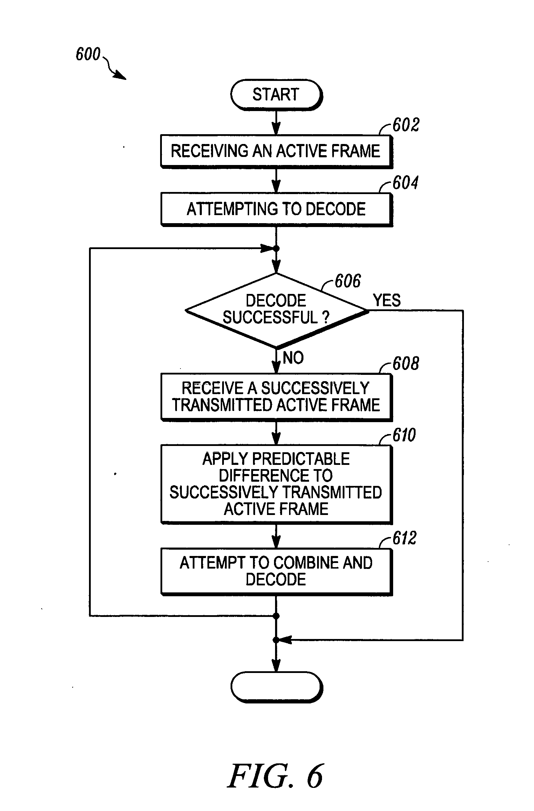

FIG. 6 illustrates a flow diagram 600 of a method of receiving and attempting to decode one or more successively transmitted frames in a wireless communication device for a broadcast of interest in a cellular communication network. The method includes receiving a first active frame 602, and attempting to decode 604 the broadcast channel information from the received frame. A determination 606 is then made as to whether the particular active frame can be decoded. If yes, no further processing is necessary in conjunction with decoding the particular frame. However the decoded frame could be used as part of attempts to decode other related active frames that have been received. If the decoding of the frame was unsuccessful, a successively transmitted active frame is received 608. An attempt is then made to decode and combine the multiple active frames 612, after an assumed predictable difference is applied 610 to the successively transmitted active frame, which is consistent with the relative transmission sequence of the successively transmitted active frame relative to the first active frame received.

In at least some embodiments, the application of one or more linear encodings techniques can allow for a predictable difference, based upon a known difference prior to encoding. Examples of several techniques that can be linearly applied include convolutional encoding, a cyclic redundancy check, data interleaving, turbo encoding, the puncturing of predefined portions of the data, as well as the repetition of predefined portions of the data.

While the present application focuses on an encoding based upon techniques that can be linearly applied, and a predictable difference in the encoded values based upon a known difference in the values prior to encoding, based upon the relative position of the active frame with respect to a transmission interval boundary, the application of one or more additional encodings including some which may not be linear in nature are possible without departing from the teachings of the present invention. For example, it may be desirable to apply cell specific configuration, which can includes a cell specific channel interleaving and/or a cell specific channel scrambling (non-linear), in order to assist in distinguishing between different transmissions from different cellular base transceiver stations, so long as the appropriate decoding is accounted for at the receiver.

Furthermore while the present application generally refers to a mobile station, or a mobile wireless communication device, one skilled in the art will recognize the many different forms that are encompassed by such a generalized description including but not limited to cellular radio telephone, pagers, personal digital assistants, as well as other devices which support the wireless communication through their interaction with a cellular network infrastructure.

While the preferred embodiments of the invention have been illustrated and described, it is to be understood that the invention is not so limited. Numerous modifications, changes, variations, substitutions and equivalents will occur to those skilled in the art without departing from the scope of the present invention as defined by the appended claims.

## Claims

1. A wireless communication serving station (104) comprising:
an encoder for converting data intended to be transmitted into a broadcast channel signal (300), and a transmitter for communicating the broadcast channel signal in the form of a wireless communication signal, the wireless communication serving station **characterized in that** said broadcast channel signal includes:
one or more transmission intervals (202), each transmission interval including a plurality of transmissions, where one or more of the plurality of transmissions are active frames (204) that include a jointly encoded set of data, wherein the data prior to encoding includes a variant portion (304), which changes between multiple active frame transmissions within a particular transmission interval, and an invariant portion (302), which does not change between multiple frame transmissions within the particular transmission interval;
wherein known differences between the data associated with a plurality of sequentially transmitted active frames within a particular transmission interval prior to encoding will produce a predictable difference between data associated with the plurality of successively transmitted active frames within a particular transmission interval after encoding, and where the known differences are known at each of the transmitter and a receiver (412) intended to receive the signal.

2. A wireless communication serving station in accordance with claim 1, wherein the jointly encoded set of data is encoded using one or more linear encoding techniques.

3. A wireless communication serving station in accordance with claim 2, wherein the one or more linear encoding techniques includes a convolutional encoding.

4. A wireless communication serving station in accordance with claim 2, wherein the one or more linear encoding techniques includes a cyclic redundancy check.

5. A wireless communication serving station in accordance with claim 2, wherein the one or more linear encoding techniques includes data interleaving.

6. A wireless communication serving station in accordance with claim 2, wherein the one or more linear encoding techniques includes turbo encoding.

7. A wireless communication serving station in accordance with claim 2, wherein the one or more linear encoding techniques includes puncturing predefined portions of the data.

8. A wireless communication serving station in accordance with claim 2, wherein the one or more linear encoding techniques includes repeating predefined portions of the data.

9. A wireless communication serving station in accordance with claim 1, wherein the variant portion includes a system frame number which changes between the transmission of each transmission.

10. A wireless communication serving station in accordance with claim 9, wherein the system frame number associated with the first transmission in a particular transmission interval has a mod n value of zero, where n is the number of frames in the transmission interval, and wherein the number of transmissions in the transmission interval has a value of 2 raised to an integer power.

11. A wireless communication serving station in accordance with claim 10, wherein the variant portion of the transmission includes an invariant subportion and a variant subportion, and wherein the variant subportion includes a number of bits equal to the integer power that the value of 2 was raised to for identifying the number of frames in the transmission interval.

12. A wireless communication serving station in accordance with claim 1, wherein the encoding of each active frame in the transmission interval is based upon the position of the active frame within the sequence of frames forming the transmission interval.

13. A wireless communication serving station in accordance with claim 1, wherein the encoding of each active frame in the transmission interval is based upon the source of the transmission.

14. A wireless communication serving station in accordance with claim 13, wherein a source of the transmission is a cellular communication system base transceiver station.

15. A wireless communication device comprising:
a receiver (412) for receiving a wireless communication signal in the form of one or more transmission intervals (202), where each transmission interval includes a plurality of transmissions, where one or more of the plurality of transmissions are active frames (204); and
a decoder (414) for converting the received signal into the data intended to be transmitted prior to an encoding for transmission, said decoder including a controller (416), wherein the controller includes a decode module (418) adapted to attempt to decode each active frame as it is received, and **characterized in that** the controller is adapted to combine multiple active frames of a particular transmission interval, when one or more of the received active frames can not be separately decoded, where prior to combining the multiple active frames, a transformation is applied to at least one of the received active frames prior to combining, where the transformation is based upon a predictable difference after encoding between the data associated with a plurality of successively transmitted active frames within a particular transmission interval determined by a predictable difference select (420) including a difference bank from assumed differences between the data associated with the plurality of successively transmitted active frames within the particular transmission interval prior to encoding.

16. A wireless communication device in accordance with claim 15, wherein the wireless communication signal is a broadcast channel, where each active frame includes a jointly encoded set of data including a variant portion, which changes between multiple active frame transmissions within a particular transmission interval, and an invariant portion, which does not change between multiple active frame transmissions within the particular transmission interval.

17. A wireless communication device in accordance with claim 15, wherein the decoder includes a plurality of received signal buffers, wherein the number of received signal buffers is equal to the number of active frames in each transmission interval.

18. A wireless communication device in accordance with claim 17, wherein the earliest received active frame in the received signal buffers is assumed to be the first of the plurality of active frames transmitted in the particular transmission interval.

19. A wireless communication device in accordance with claim 15, wherein the multiple active frames combined by the controller are successively transmitted active frames, which are adjacently transmitted.

20. A wireless communication device in accordance with claim 15, wherein the decoder includes a timer for detecting the time interval between receipt of each active frame.

## Patentansprüche

1. Drahtloskommunikations-Dienststation (104), umfassend:
einen Encoder zum Konvertieren von Daten, die gesendet werden sollen, in ein Rundfunkkanalsignal (300), und einen Sender zum Kommunizieren des Rundfunkkanalsignals in der Form eines Drahtloskommunikationssignals, wobei die Drahtloskommunikations-Dienststation **dadurch gekennzeichnet ist, dass** das Rundfunkkanalsignal Folgendes enthält:
ein oder mehrere Sendungsintervalle (202), wobei jedes Sendungsintervall eine Mehrzahl von Sendungen enthält, wobei eine oder mehrere der Mehrzahl von Sendungen aktive Frames (204) sind, die einen gemeinsam codierten Datensatz enthalten, wobei die Daten vor dem Codieren einen veränderlichen Anteil (304) enthalten, der sich zwischen mehreren aktiven Frame-Sendungen in einem bestimmten Sendungsintervall ändert, und einen unveränderlichen Anteil (302), der sich zwischen mehreren Frame-Sendungen in dem bestimmten Sendungsintervall nicht ändert,
wobei bekannte Unterschiede zwischen den Daten, die zu einer Mehrzahl von sequenziell gesendeten aktiven Frames in einem bestimmten Sendungsintervall vor dem Codieren gehören, einen vorhersehbaren Unterschied zwischen Daten erzeugen, die zu der Mehrzahl von nacheinander gesendeten aktiven Frames in einem bestimmten Sendungsintervall nach dem Codieren gehören, und wobei die bekannten Unterschiede bei jedem der Sender und einem Empfänger (412), der das Signal empfangen soll, bekannt sind.

2. Drahtloskommunikations-Dienststation nach Anspruch 1, wobei der gemeinsam codierte Datensatz mittels einer oder mehrerer linearer Codierungstechniken codiert wird.

3. Drahtloskommunikations-Dienststation nach Anspruch 2, wobei die eine oder mehreren linearen Codierungstechniken eine Faltungscodierung einschließen.

4. Drahtloskommunikations-Dienststation nach Anspruch 2, wobei die eine oder mehreren linearen Codierungstechniken eine zyklische Redundanzprüfung einschließen.

5. Drahtloskommunikations-Dienststation nach Anspruch 2, wobei die eine oder mehreren linearen Codierungstechniken das Interleaving von Daten einschließen.

6. Drahtloskommunikations-Dienststation nach Anspruch 2, wobei die eine oder mehreren linearen Codierungstechniken eine Turbo-Codierung einschließen.

7. Drahtloskommunikations-Dienststation nach Anspruch 2, wobei die eine oder mehreren linearen Codierungstechniken das Punktieren vordefinierter Anteile der Daten einschließen.

8. Drahtloskommunikations-Dienststation nach Anspruch 2, wobei die eine oder mehreren linearen Codierungstechniken das Wiederholen vordefinierter Anteile der Daten einschließen.

9. Drahtloskommunikations-Dienststation nach Anspruch 1, wobei der veränderliche Anteil eine Systemframenummer enthält, die sich zwischen der Sendung jeder Sendung ändert.

10. Drahtloskommunikations-Dienststation nach Anspruch 9, wobei die Systemframenummer, die zu der ersten Sendung in einem bestimmten Sendungsintervall gehört, einen Modulo-n-Wert von Null hat, wobei n der Anzahl der Frames im Sendungsintervall entspricht, und wobei die Anzahl der Sendungen im Sendungsintervall einen Wert von 2 hoch einer ganzen Zahl hat.

11. Drahtloskommunikations-Dienststation nach Anspruch 10, wobei der veränderliche Anteil der Sendung einen unveränderlichen Unteranteil und einen veränderlichen Unteranteil hat, und wobei der veränderliche Unteranteil eine Anzahl von Bits enthält, die gleich der ganzzahligen Potenz ist, die dem Wert von 2 zugewiesen wurde, um die Anzahl der Frames im Sendungsintervall zu bestimmen.

12. Drahtloskommunikations-Dienststation nach Anspruch 1, wobei das Codieren jedes aktiven Frames im Sendungsintervall auf der Position des aktiven Frames in der Reihenfolge der Frames, die das Sendungsintervall bilden, basiert.

13. Drahtloskommunikations-Dienststation nach Anspruch 1, wobei das Codieren jedes aktiven Frames im Sendungsintervall auf der Quelle der Sendung basiert.

14. Drahtloskommunikations-Dienststation nach Anspruch 13, wobei eine Quelle der Sendung eine Basis-Sender/Empfänger-Station eines mobilen Kommunikationssystems ist.

15. Drahtloskommunikationsvorrichtung, umfassend:
einen Empfänger (412) zum Empfangen eines Drahtloskommunikationssignals in der Form einer oder mehrerer Sendungsintervalle (202), wobei jedes Sendungsintervall eine Mehrzahl von Sendungen enthält, wobei eine oder mehrere der Mehrzahl von Sendungen aktive Frames (204) sind; und
einen Decoder (414) zum Konvertieren des empfangenen Signals in die Daten, die gesendet werden sollten, vor dem Codieren für die Sendung, wobei der Decoder eine Steuerung (416) enthält, wobei die Steuerung ein Decodiermodul (418) enthält, das ausgelegt ist, zu versuchen, jeden aktiven Frame zu decodieren, der empfangen wird, und **dadurch gekennzeichnet, dass** die Steuerung ausgelegt ist, mehrere aktive Frames eines bestimmten Sendungsintervalls zu kombinieren, wenn einer oder mehrere der empfangenen aktiven Frames nicht separat decodiert werden können, wobei vor dem Kombinieren der mehreren aktiven Frames eine Transformation auf mindestens einen der empfangenen aktiven Frames vor dem Kombinieren angewandt wird, wobei die Transformation auf einem vorhersehbaren Unterschied nach dem Codieren basiert, zwischen den Daten, die zu einer Mehrzahl von nacheinander gesendeten aktiven Frames in einem bestimmten Sendungsintervall gehören, bestimmt durch eine vorhersehbare Unterschiedauswahl (420), die eine Unterschiedbank von angenommenen Unterschieden zwischen den Daten enthält, die zu der Mehrzahl von nacheinander gesendeten aktiven Frames in dem bestimmten Sendungsintervall vor dem Codieren gehören.

16. Drahtloskommunikationsvorrichtung nach Anspruch 15, wobei das Drahtloskommunikationssignal ein Rundfunkkanal ist, in dem jeder aktive Frame einen gemeinsam codierten Datensatz enthält, der einen veränderlichen Anteil enthält, der sich zwischen mehreren aktiven Frame-Sendungen in einem bestimmten Sendungsintervall ändert, und einen unveränderlichen Anteil, der sich zwischen mehreren aktiven Frame-Sendungen in dem bestimmten Sendungsintervall nicht ändert.

17. Drahtloskommunikationsvorrichtung nach Anspruch 15, wobei der Decoder eine Mehrzahl von empfangenen Signalpuffern enthält, wobei die Anzahl der empfangenen Signalpuffer gleich der Anzahl der aktiven Frames in jedem Sendungsintervall ist.

18. Drahtloskommunikationsvorrichtung nach Anspruch 17, wobei vom frühesten empfangenen aktiven Frame in den empfangenen Signalpuffern angenommen wird, dass er der erste der Mehrzahl von aktiven Frames ist, die in dem bestimmten Sendungsintervall gesendet werden.

19. Drahtloskommunikationsvorrichtung nach Anspruch 15, wobei die mehreren aktiven Frames, die von der Steuerung kombiniert werden, nacheinander gesendete aktive Frames sind, die nebeneinander gesendet werden.

20. Drahtloskommunikationsvorrichtung nach Anspruch 15, wobei der Decoder einen Zeitnehmer zum Detektieren des Zeitintervalls zwischen dem Empfang jedes aktiven Frames enthält.

## Revendications

1. Station de desserte de communication sans fil (104) comprenant :
un codeur pour convertir des données destinées à être transmises dans un signal de canal de diffusion (300), et un émetteur pour communiquer le signal de canal de diffusion sous la forme d'un signal de communication sans fil, la station de desserte de communication sans fil étant **caractérisée en ce que** ledit signal de canal de diffusion comprend :
un ou plusieurs intervalles de transmission (202), chaque intervalle de transmission comprenant une pluralité de transmissions, une ou plusieurs de la pluralité de transmissions étant des trames actives (204) qui comprennent un ensemble de données codé de manière combinée, les données avant codage comprenant une partie variable (304), qui change entre de multiples transmissions de trames actives dans un intervalle de transmission particulier, et une partie invariable (302), qui ne change pas entre de multiples transmissions de trames dans l'intervalle de transmission particulier ;
dans laquelle des différences connues entre les données associées à une pluralité de trames actives transmises de manière séquentielle dans un intervalle de transmission particulier avant codage produiront une différence prévisible entre des données associées à la pluralité de trames actives transmises de manière successive dans un intervalle de transmission particulier après codage, et les différences connues étant connues au niveau de chacun de l'émetteur et d'un récepteur (412) destiné à recevoir le signal.

2. Station de desserte de communication sans fil selon la revendication 1, dans laquelle l'ensemble de données codé de manière combinée est codé à l'aide d'une ou plusieurs techniques de codage linéaire.

3. Station de desserte de communication sans fil selon la revendication 2, dans laquelle la ou les techniques de codage linéaire comprennent un codage par convolution.

4. Station de desserte de communication sans fil selon la revendication 2, dans laquelle la ou les techniques de codage linéaire comprennent un contrôle de redondance cyclique.

5. Station de desserte de communication sans fil selon la revendication 2, dans laquelle la ou les techniques de codage linéaire comprennent un entrelacement de données.

6. Station de desserte de communication sans fil selon la revendication 2, dans laquelle la ou les techniques de codage linéaire comprennent un turbo codage.

7. Station de desserte de communication sans fil selon la revendication 2, dans laquelle la ou les techniques de codage linéaire comprennent un poinçonnement de parties prédéfinies des données.

8. Station de desserte de communication sans fil selon la revendication 2, dans laquelle la ou les techniques de codage linéaire comprennent la répétition de parties prédéfinies des données.

9. Station de desserte de communication sans fil selon la revendication 1, dans laquelle la partie variable comprend un nombre de trames de système qui change entre la transmission de chaque transmission.

10. Station de desserte de communication sans fil selon la revendication 9, dans laquelle le nombre de trames de système associé à la première transmission dans un intervalle de transmission particulier possède une valeur modulo n de zéro, n étant le nombre de trames dans l'intervalle de transmission, et le nombre de transmissions dans l'intervalle de transmission ayant une valeur de 2 élevée à une puissance entière.

11. Station de desserte de communication sans fil selon la revendication 10, dans laquelle la partie variable de la transmission comprend une sous-partie invariable et une sous-partie variable, et la sous-partie variable comprenant un nombre de bits égal à la puissance entière à laquelle la valeur de 2 a été élevée pour identifier le nombre de trames dans l'intervalle de transmission.

12. Station de desserte de communication sans fil selon la revendication 1, dans laquelle le codage de chaque trame active dans l'intervalle de transmission est basé sur la position de la trame active dans la séquence de trames formant l'intervalle de transmission.

13. Station de desserte de communication sans fil selon la revendication 1, dans laquelle le codage de chaque trame active dans l'intervalle de transmission est basé sur la source de la transmission.

14. Station de desserte de communication sans fil selon la revendication 13, dans laquelle une source de la transmission est une station d'émetteur-récepteur de base de système de communication cellulaire.

15. Dispositif de communication sans fil comprenant :
un récepteur (412) pour recevoir un signal de communication sans fil sous la forme d'un ou plusieurs intervalles de transmission (202), chaque intervalle de transmission comprenant une pluralité de transmissions, une ou plusieurs de la pluralité de transmissions étant des trames actives (204) ; et
un décodeur (404) pour convertir le signal reçu en les données destinées à être transmises avant un codage pour transmission, ledit décodeur comprenant un contrôleur (416), le contrôleur comprenant un module de décodage (418) apte à tenter de décoder chaque trame active à mesure qu'elle est reçue, et **caractérisé en ce que** le contrôleur est apte à combiner de multiples trames actives d'un intervalle de transmission particulier, lorsqu'une ou plusieurs des trames actives reçues ne peuvent pas être décodées séparément, dans lequel avant combinaison des trames actives multiples, une transformation est appliquée à au moins l'une des trames actives reçues avant combinaison, la transformation étant basée sur une différence prévisible après codage entre les données associées à une pluralité de trames actives transmises de manière successive dans un intervalle de transmission particulier déterminé par une sélection de différence prévisible (420) comprenant une réserve de différences à partir de différences supposées entre les données associées à la pluralité de trames actives transmises de manière successive dans l'intervalle de transmission particulier avant codage.

16. Dispositif de communication sans fil selon la revendication 15, dans lequel le signal de communication sans fil est un canal de diffusion, chaque trame active comprenant un ensemble de données codées de manière combinée comprenant une partie variable, qui change entre de multiples transmissions de trames actives dans un intervalle de transmission particulier, et une partie invariable, qui ne change entre de multiples transmissions de trames actives dans l'intervalle de transmission particulier.

17. Dispositif de communication sans fil selon la revendication 15, dans lequel le décodeur comprend une pluralité de tampons de signal reçu, le nombre de tampons de signal reçu étant égal au nombre de trames actives dans chaque intervalle de transmission.

18. Dispositif de communication sans fil selon la revendication 17, dans lequel la trame active reçue en premier dans les tampons de signal reçu est supposée comme étant la première de la pluralité de trames actives transmises dans l'intervalle de transmission particulier.

19. Dispositif de communication sans fil selon la revendication 15, dans lequel les trames actives multiples combinées par le contrôleur sont des trames actives transmises de manière successive, qui sont transmises de manière adjacente.

20. Dispositif de communication sans fil selon la revendication 15, dans lequel le décodeur comprend un temporisateur pour détecter l'intervalle de temps entre la réception de chaque trame active.
